# EUROPEAN PATENT APPLICATION

(11) **EP 4 299 898 A1**
(43) Date of publication of application: **03.01.2024**
(21) Application number: 22382626.4
(22) Date of filing: 01.07.2022
(51) Int. Cl.: F03D 7/02, F03D 7/04

(54) **NOISE BASED CONTROL OF A WIND TURBINE**

(71) Applicant: Siemens Gamesa Renewable Energy Innovation & Technology S.L., 31621 Sarriguren (Navarra) (ES)
(72) Inventor: Díaz de Corcuera Martinez, Asier, 01002 Vitoria (ES); Ortubia, Iñigo, 20009 San Sebastián (ES)
(74) Representative: SGRE-Association

(57) **Abstract**

It is described a method of controlling a wind turbine (20), the method comprising: obtaining wind characteristic information (3); obtaining wind turbine operational parameters (4); estimating noise (6) based on at least the wind characteristic information (3) and the wind turbine operational parameters (4); controlling (12) the wind turbine (20) based on a comparison between the estimated noise (6) and a noise reference (8).

## Description

### Field of invention

The present invention relates to a method and a corresponding arrangement of controlling a wind turbine, including to estimate noise based on several input parameters. Furthermore, the present invention relates to a wind turbine comprising the arrangement and being connected to control the wind turbine.

### Art Background

During operation, a wind turbine generates noise which may disturb the environment. Noise generation in wind turbines may be in particular a critical problem in onshore wind farms. Due to local noise policies in different countries, noise generation by wind farms may represent an important limitation for the operation of the wind turbine.

Typically, wind turbines may emit a relatively weak but characteristic noise which is mainly generated by the movement of the blades through the air. The generated noise may comprise a swishing sound in rate with the rotation of the blades as well as noise from the turbine machinery. The machine noise may have a tonal character which is particularly annoying.

Wind turbines have to observe the noise limits in accordance with the statutory order on the wind turbines. The noise limit may apply to the total noise from all wind turbines of a wind park and may be set for both weak winds, when noise is found to be most annoying, and stronger winds. The local limits by local authorities may have been laid down to ensure that no significant disturbance is experienced.

The publication "On predicting wind turbine noise and amplitude modulation using Amiet's theory" by Samuel Sinayoko and Jeremy Hurault, 6th International Conference on Wind Turbine Noise Glasgow 20-23 April 2015, discloses predicting wind turbine noise and amplitude modulation using Amiet's theory. This article concludes that inflow noise is found to be very sensitive to the level of turbulence intensity, rather than to the size of the integral length scale. If the turbulence intensity is set much higher in the prediction than in the experiment, for example to 20% compared to 10%, then the overall sound power level is overestimated by up to 1.5 dBA.

Conventionally, power derating has been applied in order to reduce noise levels to acceptable noise levels. The conventional derating configurations may be based on offline predefined solutions and may not consider the current wind field characteristics.

EP 2 798 198 B1 discloses determining a boundary layer profile of the wind coming towards the wind turbine, determining the wind velocity at a predetermined height based on the boundary layer profile determined, and operating the wind turbine to maintain the emitted noise below a predetermined noise level when the wind velocity at the predetermined height is below a predetermined value.

EP 2 762 721 B1 discloses a method and apparatus for wind turbine noise reduction wherein a yaw angle setting is determined as a function of a determined wind shear.

EP 2 927 483 A1 discloses a noise control in wind turbines wherein an angle of attack objective for a selected section of a blade is obtained and substantially continuously the angle of attack is determined. Further, the blade is substantially continuously pitched to achieve the angle of attack objective.

It has however been observed that the conventional methods and systems for operating a wind turbine not in all circumstances result in satisfactory results regarding noise control.

Thus, there may be a need for a method and a corresponding arrangement of controlling a wind turbine, wherein noise limitations are met, and/or the wind turbine is operated in an improved manner, in particular regarding performance and/or the methodology is simplified/or equipment is less complex.

### Summary of the Invention

This need may be met by the subject matter according to the independent claims. Advantageous embodiments of the present invention are described by the dependent claims.

According to an embodiment of the present invention it is provided a method of controlling a wind turbine, the method comprising obtaining wind characteristic information; obtaining wind turbine operational parameters; estimating noise based on at least the wind characteristic information and the wind turbine operational parameters; controlling the wind turbine based on a comparison between the estimated noise and a noise reference.

The method may be implemented in software and/or hardware and may in particular be implemented as a computer program, which can be executed by a computer processor. The method may in particular be performed by a module of a wind turbine controller.

The wind characteristic information may provide information regarding the characteristics of the wind at the present point in time, in particular regarding wind speed and/or wind direction and/or turbulence intensity and/or shear and so forth. The wind characteristic information may have been estimated or measured using one or more wind sensitive sensors which may be installed at the wind turbine or at a wind mast or may be obtained from an external information source. The wind characteristic information may be associated with or relate to the particular wind turbine under consideration. Thus, the wind characteristic information may provide the local wind characteristics which is present at the present point in time around the wind turbine and in particular upstream the wind turbine or in a rotor plane. For upstream wind characteristic measurements, in particular a LIDAR system, may be employed and may be available at the wind turbine.

The wind turbine operational parameters may comprise a number of parameters defining the operational state and the operational characteristics of the wind turbine in particular including rotational speed, blade angle setting and so forth as will be detailed below.

The noise may be estimated using a physical/mathematical model and/or using processed training data which result in a model or for example in a look up table or a mathematical formula.

The wind field characteristics may, apart from turbulence intensity (TI), comprise e.g. wind direction and/or wind shear and/or rotor effective wind speed.

A broader set of wind field characteristics may be used in our case for estimating noise, including e.g. TI, shear and wind direction, measured upstream or at rotor plane plus wind turbine operational characteristics. Traditionally noise estimators might be based on wind turbine operational characteristics and/or downstream wind speed/direction. Additionally, downstream wind speed/direction might be biased due to the disturbances the rotor generates upon the wind field, so the proposed method should be free of that disturbance.

When the wind characteristic information as well as the wind turbine operational parameters, the noise generated by the wind turbine may be estimated in an improved and more accurate manner compared to conventional methods.

The noise reference may substantially correspond or be equal to a noise limit as required by local regulations of the local jurisdiction. The wind turbine may in particular be controlled such that the actual noise generated by the wind turbine stays below the noise reference.

According to an embodiment of the present invention, the method further comprises deriving a difference noise between the estimated noise and the noise reference; controlling the wind turbine based on the difference noise, in order to reduce the difference noise.

The difference noise may for example be supplied to a control module, such as a PI controller. Thereby, conventional control modules may be supported and utilized for implementing the method.

According to an embodiment of the present invention, controlling the wind turbine comprises activating a noise mode from plural predetermined modes in dependence of the value of the difference noise.

Each of the plural predetermined operational modes may have been analyzed previously regarding generated noise. In other embodiments, each of the plural predetermined modes may have been analyzed regarding noise estimation. Each of the plural predetermined operational modes may be characterized by particular operational parameters of the wind turbine, including for example at least one of rotational speed, pitch angle setting, yawing offset, power output or generator power, generator torque, etc. For different difference noises, the predetermined modes may for example be listed for example in a look up table. Thereby, the method may be simplified.

According to an embodiment of the present invention, controlling the wind turbine includes at least one of reduction of power output; reduction of rotational speed; changing a pitch angle toward less lift; operating the wind turbine according to an adapted power-rotational speed reference curve; changing/increasing a minimal pitch angle; based on the difference noise, in particular if the difference noise is greater than zero.

One or more of the above listed measures may be taken separately or in combination, in order to reduce noise generated by the wind turbine. The measures may be applied separately or in combination in particular if the difference noise is greater than zero, meaning that the estimated noise is greater than the noise reference.

Reduction of power output may be achieved by changing the pitch angle and/or changing the generator torque and/or changing the rotational speed of the rotor. Reduction of the rotational speed may be achieved by changing the pitch angle and/or changing the generator torque for example.

Nominally, the wind turbine may be operated according to a nominal power-rotational speed reference curve. The power-rotational speed reference curve may indicate at which rotational speed which amount of power the wind turbine should output. The power-rotational speed reference curve may define the pair of values power and rotational speed in dependency of the wind speed. Adapting the power-rotational speed reference curve may for example involve to reduce a rated power and/or also to reduce a rated wind speed. Thereby, noise generation may be reduced.

According to an embodiment of the present invention, controlling the wind turbine includes reducing power output the more the greater the difference noise. Thereby, the actual generated noise may be effectively reduced to be below the reference noise.

According to an embodiment of the present invention, the wind characteristic information comprises at least one of a wind speed, in particular rotor effective wind speed; a wind direction; a wind turbulence intensity; a shear, in particular horizontal and/or vertical.

The rotor effective wind speed may be a wind speed which may have been derived based on plural wind speed measurements, in particular upstream of a rotor plane, in particular using a LIDAR equipment. The rotor effective wind speed may involve to average plural wind speed measurements, in order to obtain a more reliable wind speed which considers the entire area the rotor blades cover during operation of the wind turbine.

The wind characteristic information may be measured and/or estimated, in particular using one or more wind sensitive sensors installed at the wind turbine or at a met mast or at another location of the wind farm. The method may in particular involve to predict or estimate or in particular measure the local wind characteristic at the wind turbine under consideration.

Wind turbulence intensity may relate to a standard deviation of the wind speed from an average wind speed.

For wind turbines TI may be defined as the standard deviation of the horizontal wind speed (the horizontal component of the speed vector) divided by the average of wind speed over a time period (usually 10 min average data is taken).

A wind shear may be measured by comparing wind speed measurements of plural wind speed measurement sensors which are located at different positions. The shear may indicate the change of the wind speed with position. Taking one or more of the above listed parameters or quantities into consideration may improve to estimate the noise the wind turbine generates.

According to an embodiment of the present invention, the wind characteristic information is provided by at least one of a LIDAR system, in particular configured to optically measure wind speed at plural regions upstream a rotor plane; at least one wind speed sensor, in particular mounted at a nacelle; at least one wind direction sensor, in particular mounted at a nacelle; a wind estimation system.

Thereby, conventionally available systems may be supported and utilized to implement the method. The rotor effective wind speed may for example be derived by averaging the wind speed measurements at the plural regions as obtained by the LIDAR system. Using the LIDAR system may reduce shadowing effects of systems where conventionally wind speed sensors may be installed at the nacelle, i.e. in particular downstream the rotor plane.

According to an embodiment of the present invention, the wind turbine operational parameters include at least one of rotational speed of a rotor; generator power or power output; state of the wind turbine, in particular idling or not-idling.

One or more other operational parameters may be considered, in particular those which might affect the generated noise or which are indicative of the generated noise. In particular, all operational parameters as employed or considered by Amiet's theory may be taken into account.

According to an embodiment of the present invention, the noise reference adheres to local legal requirements. Thereby, it may be ensured that the operation of the wind turbine respects the local legal requirements. The noise reference may for example be obtained by a park manager or park controller or a wind park operator.

According to an embodiment of the present invention, the estimating of the noise based on at least the wind characteristic information and the wind turbine operational parameters includes at least one of applying a look up table listing plural measured or simulated noise values in dependency of plural wind characteristic information data and wind turbine operational parameter data; applying a predetermined formula expressing noise as a function of the wind characteristic information and the wind turbine operational parameters; applying a noise estimation model considering at least the wind characteristic information and the wind turbine operational parameters.

Thereby, different methods to implement the estimation may be provided. For example, training data may be acquired for different wind characteristic data and different wind turbine operational parameter data. The look up table may thereby be or represent a multidimensional look up table which may have been derived by processing the training data, in order to list for different wind turbine operational parameter data and different wind characteristic information data the associated noise value or noise level. The noise may be measured in decibel, for example. The predetermined formula may for example comprise a mathematical formula, e.g. representing a fit to training data. The noise estimation model may comprise a physical/mathematical model, for example also including Amiet's theory and the respective equations.

It should be understood, that features, individually or in any combination, explained, applied, described or provided for a method of controlling a wind turbine may also apply, individually or in any combination, to an arrangement for controlling the wind turbine, according to embodiments of the present invention and vice versa.

According to an embodiment of the present invention it is provided an arrangement for controlling a wind turbine, the arrangement comprising an input port configured, to obtain wind characteristic information and to obtain wind turbine operational parameters; a processing module configured to estimate noise based on at least the wind characteristic information and the wind turbine operational parameters; an output port configured to control the wind turbine based on a comparison between the estimated noise and a noise reference.

Furthermore, according to an embodiment of the present invention it is provided a wind turbine, comprising: a rotor having plural rotor blade mounted thereon; an arrangement according to the preceding embodiment, connected to control the wind turbine.

The wind turbine may comprise a LIDAR system, connected to the arrangement in order to supply at least part of the wind characteristic information.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates an arrangement for controlling a wind turbine according to an embodiment of the present invention which is arranged to perform a method of controlling a wind turbine according to an embodiment of the present invention;
Fig. 2 schematically illustrates a wind turbine according to an embodiment of the present invention;
Fig. 3 illustrates example implementations of reducing power output according to embodiments of the present invention; and
Figs. 4, 5, 6, 7 illustrate graphs showing aspects of embodiments of the present invention.

### Detailed Description

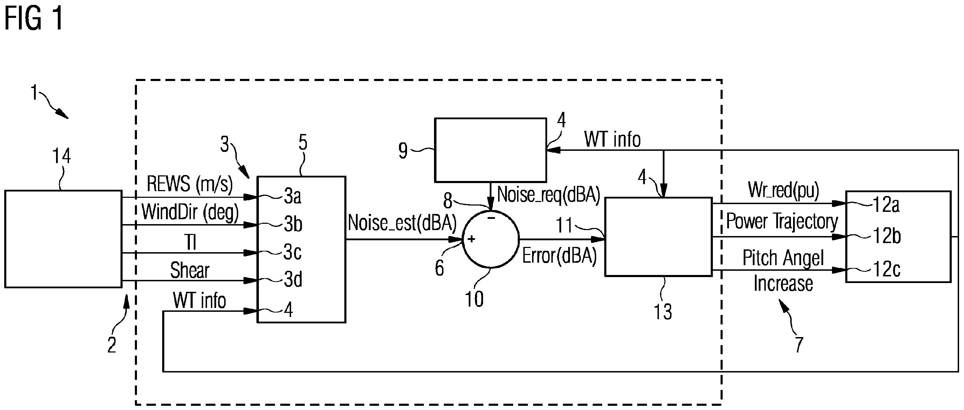

The arrangement 1 illustrated in **Fig. 1** in a schematic manner comprises an input port 2 which is configured to obtain wind characteristic information 3 and to obtain wind turbine operational parameters 4. The arrangement 1 further comprises a processing module 5 (also referred to as noise estimator) which is configured to estimate noise 6 based on at least the wind characteristic information 3 and the wind turbine operational parameters 4. The arrangement 1 further comprises an output port 7 which is configured to control the wind turbine based on a comparison between the estimated noise 6 and a noise reference 8.

In the illustrated embodiment, the wind characteristic information 3 comprises a wind speed 3a, in particular rotor effective wind speed, a wind direction 3b, wind turbulence intensity 3c and wind shear 3d, in particular horizontal and/or vertical wind shear. Further, the wind turbine operational parameters 4 may comprise a rotational speed of a rotor of the wind turbine, pitch angle of blades, generator power or power output of the wind turbine and/or a state of the wind turbine, in particular idling or not-idling.

In the illustrated embodiment, the reference noise 8 is provided by a noise reference manager 9 which also (optionally) may obtain the wind turbine operational parameters 4 or a subset of operational parameters of the wind turbine.

The arrangement 1 is configured to perform a method of controlling a wind turbine according to an embodiment of the present invention. Thereby, the arrangement derives, employing a difference module 10, a difference noise 11 between the estimated noise 6 and the noise reference 8. Based on the difference noise 11, the arrangement controls the wind turbine by outputting control signals 12, in particular comprising a reduction of power output 12a and/or an adaptation of a power trajectory 12b and/or a signal regarding a pitch angle change, in particular pitch angle increase 12c. The respective control signals 12a, 12b, 12c are generated by a noise control module 13 which receives the difference noise 11 as well as the wind turbine operational parameters 4 and derives therefrom the control signals 12a, 12b, 12c.

The noise control module 13 may for example activate a noise mode from plural predetermined modes in dependence of the value of the difference noise 11.

In the illustrated embodiment, the wind characteristic information is provided by wind characterization sensors and estimators block 14. The wind characterization block 14 may comprise for example a LIDAR system as will be explained below. The noise manager provides or outputs the noise reference 8 such as to adhere to local legal requirements. The noise estimator 5 or pressing processing module 5 may be implemented in a number of different manners.

The noise estimator might be a physical/mathematical model with varying complexity that is based on turbine/blades characteristics and/or wind field information (either measured or estimated) and/or current wind turbine information (such as pitch blade angle etc.)

It could also be a multidimensional look-up table (LUT), that has been filled with simulation data, and based on wind field information and wind turbine information outputs a noise value.

It could also be, similarly to the previous example, a multidimensional LUT that is based on a field measurement campaign, where the noise values in the LUT instead of being computed in simulations, are derived from field data, measured with a noise sensing device.

According to an embodiment of the present invention, the noise reduction control as represented according to an embodiment of the present invention by the arrangement 1 is divided into three blocks: the noise estimator 5, the noise reference manager 9 and the noise control 13 which will be described below:

### Noise estimator

The noise estimator 5 receives inputs from the wind characteristics, in particular REWS (rotor effective wind speed) 3a, wind direction 3b, turbulence intensity 3c (TI) and horizontal and vertical shear 3d. These inputs can be measured by wind sensors or estimated by wind estimators using the block 14.

The noise estimator 5 receives as inputs from the wind turbine the rotor speed, the generated power, the status of the wind turbine (wind turbine working or not working), traditional wind sensors in the nacelle and others.

The noise estimator 5 outputs the estimated noise 6. The estimated noise may for example be measured in dBA.

### Noise reference manager

Noise reference manager 9 receives inputs from the wind turbine, in particular rotor speed, generated power, status, traditional wind sensors in the nacelle, others.

The noise reference manager 9 outputs the noise required or reference noise 8.

This block 9 may calculate the required noise or reference noise according to some parameters that may depend on the noise level and local noise policies.

### Noise control

The noise control module 13 receives as input the error noise 11.

From the wind turbine, the noise control 13 receives the rotor speed, generated power, status, traditional wind sensors in the nacelle, others.

The noise reference manager 9 outputs one or more of the below listed signals for controlling the wind turbine:

### 1) Wr_red(PU):

The control signal 12a may indicate the reduction of the reference of the rotor speed in the main wind turbine control of the wind turbine. 1 PU means that no reduction is applied in the rotor speed reference. 0 PU means that reduction in rotor speed reference = 0 rpm. If for example the rotor speed is 10 rpm and Wr red is 0.9, the new rotor speed reference in the main controller will be 9 rpm.

### 2) Power trajectory:

Modifications into the power trajectory to change the wind turbine operating points to reduce noise level. This signal 12b may for example indicate a modification of a power-rotational speed reference curve which may be provided for a number of different wind speed values. The adapted power-rotational speed reference curve may comprise a reduced nominal power and/or reduced nominal rotational speed.

### 3) Pitch increase:

Modify minimum pitch angle in blades to reduce noise level, as is represented by the control signal 12c.

The noise control module 13 aims to track the required noise 8 or the noise reference 8. The target of the noise control module 13 is to make the error signal 11 zero. In order to achieve that, some predefined (control) solutions may be parametrized. These predefined solutions have to be previously validated by aerodynamic and load experiments or simulations, to avoid situations with high loads, for example resonances due to coupling of or structural modes and rotor rotational modes. Aerodynamic simulations or training data may be formed, to validate these predefined solutions to check possible problems with blade aerodynamics due to avoid stall situations.

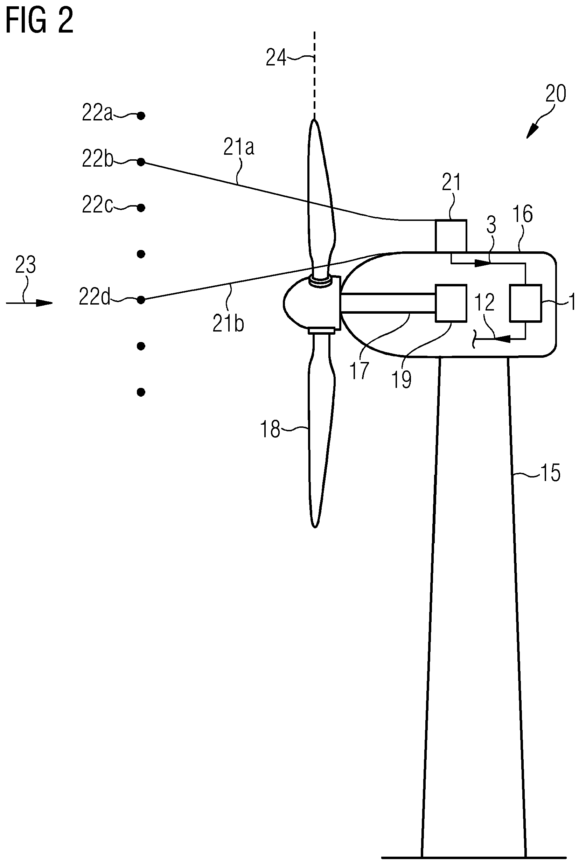

Fig. 2 schematically illustrates a wind turbine according to an embodiment of the present invention. The wind turbine comprises a wind turbine tower 15 and a nacelle 16 which is mounted on top of the tower 15. The nacelle 16 harbours a rotor 17 at which plural rotor blades 18 are mounted. The rotor 17 drives a generator system 19 in order to generate electric AC power.

The wind turbine 20 illustrated in Fig. 2 further comprises an arrangement 1 for controlling the wind turbine according to an embodiment of the present invention. The arrangement 1 may for example be configured similar or identical to the arrangement 1 illustrated in Fig. 1. The wind turbine 20 further comprises a LIDAR system 21 which is connected to the arrangement 1 in order to supply at least part of the wind characteristic information 3. The arrangement 1 comprises the output ports, where control signals 12 (for example comprising control signals 12a, 12b, 12c as illustrated in Fig. 1) are output and supplied to one or more components of the wind turbine, such as converter, pitch adjustment system.

In other embodiments another measuring system different from a LIDAR system may be used at the wind turbine.

The LIDAR system 21 is configured to measure wind characteristics, in particular wind speed, at plural measurement points 22a, 22b, 22c, 22d (or more or less measurement points) upstream (relative to a wind direction 23) the rotor plane 24 using light beams 21a, 21b.

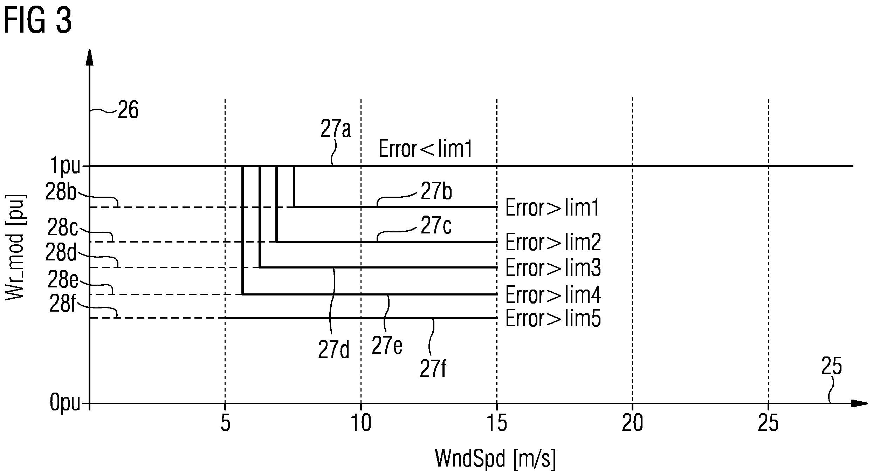

**Fig. 3** illustrates some control curves in a graph having an abscissa 25 indicating the wind speed and having an ordinate 26 indicating the generator power or wind turbine output power in nominal units (pu). The output power is reduced according to predefined solutions which depend on the value of the difference noise 11 as illustrated in Fig. 1.

If the difference noise 11 or the error is smaller than a first difference noise threshold, the output power follows the curve 27a (no reduction of power). If the error is larger or greater than the first difference noise threshold the power follows the curve 27b (reduction of power to value 28b). If the error is greater than a second difference noise threshold, the power curve follows the curve 27c (reduction of power to value 28c). If the difference noise is greater than a third threshold, the power is controlled according to curve 27d (reduction of power to value 28d). If the error is larger than a forth noise difference threshold, the power is controlled according to the curve 27e (reduction of power to value 28e). If the error 11 is greater than a fifth noise difference threshold, the power is regulated according to a predefined curve 27f (reduction of power to value 28f). The respective power levels 28b, 28c, 28d, 28e, 28f are predefined such that the respective error 11 is reduced, in order to in particular comply with the reference noise 8, at least within a particular margin, such that the error 11 is smaller than the first threshold.

It can be appreciated from Fig. 3 that the greater the error the greater the reduction of power.

If the error is smaller than the first difference noise threshold, the noise reduction strategy is not activated. If the error is greater than a first noise difference threshold, a noise operational mode 1 may be activated. If the error is greater than a second noise difference threshold, a noise operational mode 2 may be activated. If the error is greater than a third noise difference threshold, a noise operational mode 3 may be activated and so on.

According to an embodiment of the present invention, hysteresis could be applied upon activating or deactivating the respective noise mode or noise reduction strategy or to manage the change of the references between noise modes.

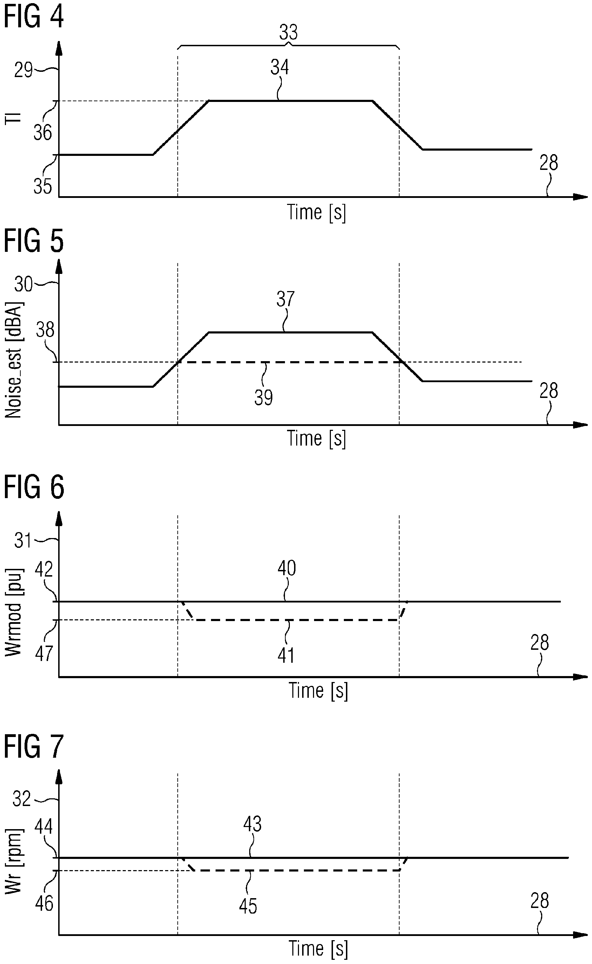

**Figs. 4, 5, 6, 7** show some examples of activated noise control or deactivated noise control in comparison during an increase in the turbulence intensity (TI) in a wind turbine. Thereby, Figs. 4, 5, 6, 7 illustrate graphs in coordinate systems having as an abscissa 28 the time and having as an ordinate 29 of Fig. 4 the turbulence intensity, having as an ordinate 30 in Fig. 5 the estimated noise, having as an ordinate 31 in Fig. 6 the power output and having as an ordinate 32 in Fig. 7 the rotational speed.

In a time interval 33, the turbulence intensity 34 in Fig. 4 increases from a previous level 35 to an increased level 36. If the noise control according to an embodiment is deactivated, the estimated noise in Fig. 5 follows a curve 37 which is in the interval 33 above a reference noise 38. If the noise control according to an embodiment of the present invention is activated, the estimated noise follows the curve 39 staying below or at, but not exceeding the reference noise 38.

The power output in Fig. 6 stays constant (curve 40) if the noise control methodology is turned off. If the noise control methodology is turned on according to an embodiment of the present invention, the power output follows the curve 41 showing a reduction of the output power to value 47 below the nominal power 42, at least during the time interval 33 showing increased turbulence intensity, as is illustrated in Fig. 6.

As can be taken from Fig. 7, when the noise control is turned off, the rotational speed follows the curve 43 showing a rotational speed corresponding to the nominal rotational speed 44. If the noise control is turned on, the rotational speed follows the curve 45, involving to reduce the rotational speed within the time interval 33 to a value 46 below the nominal rotational speed 44.

In the Figs. 6 and 7, the reduction of the wind turbine output power 41 and the reduction of the rotational speed 45 are illustrated, in order to reduce noise to adhere to the noise reference.

Embodiments of the present invention provide online detection of particular wind conditions with high noise. Safe modes for noise reduction may be activated only when they are necessary (online activation). Thereby, energy or power output of the wind turbine or performance of the wind turbine may be increased compared with offline methods to reduce the noise.

In particular, embodiments of the present invention may provide an online control of the wind turbine.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a wind turbine (20), the method comprising:
obtaining wind characteristic information (3);
obtaining wind turbine operational parameters (4);
estimating noise (6) based on at least the wind characteristic information (3) and the wind turbine operational parameters (4);
controlling (12) the wind turbine (20) based on a comparison between the estimated noise (6) and a noise reference (8) .

2. Method according to the preceding claim, further comprising:
deriving a difference noise (11) between the estimated noise (6) and the noise reference (8);
controlling the wind turbine (20) based on the difference noise (11), in order to reduce the difference noise.

3. Method according to the preceding claim, wherein controlling the wind turbine (20) comprises activating a noise mode (27a,...,f) from plural predetermined modes in dependence of the value of the difference noise (11).

4. Method according to one of the preceding claims 2 or 3, wherein controlling the wind turbine includes at least one of:
reduction of power output (12a);
reduction of rotational speed;
changing a pitch angle toward less lift (12c);
operating the wind turbine according to an adapted power-rotational speed reference curve (12b);
changing/increasing a minimal pitch angle;
based on the difference noise (11), in particular if the difference noise is greater than zero.

5. Method according to one of the preceding claims 2 to 4, wherein controlling the wind turbine includes reducing power output the more the greater the difference noise (11).

6. Method according to one of the preceding claims, wherein the wind characteristic information (3) comprises at least one of:
a wind speed, in particular rotor effective wind speed (3a) ;
a wind direction (3b);
a wind turbulence intensity (3c);
a shear (3d), in particular horizontal and/or vertical.

7. Method according to one of the preceding claims, wherein the wind characteristic information (3) is provided by at least one of:
a LIDAR system (21), in particular configured to optically measure wind speed at plural regions upstream a rotor plane;
at least one wind speed sensor, in particular mounted at a nacelle;
at least one wind direction sensor, in particular mounted at a nacelle;
a wind estimation system.

8. Method according to one of the preceding claims, wherein the wind turbine operational parameters (4) include at least one of:
rotational speed of a rotor;
generator power or power output;
state of the wind turbine, in particular idling or not-idling;

9. Method according to one of the preceding claims, wherein the noise reference (8) adheres to local legal requirements.

10. Method according to one of the preceding claims, wherein the estimating the noise based on at least the wind characteristic information and the wind turbine operational parameters includes at least one of:
applying a look up table listing plural measured or simulated noise values in dependency of plural wind characteristic information data and wind turbine operational parameter data;
applying a predetermined formula expressing noise as a function of the wind characteristic information and the wind turbine operational parameters;
applying a noise estimation model considering at least the wind characteristic information and the wind turbine operational parameters.

11. Arrangement (1) for controlling a wind turbine, the arrangement comprising:
an input port (2) configured:
to obtain wind characteristic information (3);
to obtain wind turbine operational parameters (4);
a processing module (5) configured to estimate noise (6) based on at least the wind characteristic information (3) and the wind turbine operational parameters (4);
an output port (7) configured to control the wind turbine based on a comparison between the estimated noise (6) and a noise reference (8).

12. Wind turbine (20), comprising:
a rotor (17) having plural rotor blades (18) mounted thereon;
an arrangement (1) according to the preceding claim, connected to control the wind turbine.

13. Wind turbine (20) according to the preceding claim, comprising:
a LIDAR system (21), connected to the arrangement in order to supply at least part of the wind characteristic information (3).
